# EUROPÄISCHE PATENTSCHRIFT

(11) **EP 3 733 362 B1**
(45) Veröffentlichungstag und Bekanntmachung des Hinweises auf die Patenterteilung: **07.06.2023**
(21) Anmeldenummer: 20172011.7
(22) Anmeldetag: 16.03.2017
(51) Int. Cl.: B25J 19/06, B25J 19/00, B25J 15/00

(54) **SCHUTZVORRICHTUNG FÜR EINEN EFFEKTOR EINES MANIPULATORS, VORRICHTUNG ZUM MANIPULIEREN VON WERKSTÜCKEN UND VERFAHREN ZUM BETÄTIGEN EINER VORRICHTUNG ZUM MANIPULIEREN VON WERKSTÜCKEN**
PROTECTION DEVICE FOR AN EFFECTOR OF A MANIPULATOR, DEVICE FOR MANIPULATING WORKPIECES AND METHOD FOR ACTUATING A DEVICE FOR MANIPULATING WORKPIECES
DISPOSITIF DE PROTECTION POUR UN EFFECTEUR D'UN MANIPULATEUR, DISPOSITIF DE MANIPULATION DE PIÈCES ET PROCÉDÉ DE FONCTIONNEMENT D'UN DISPOSITIF DE MANIPULATION DE PIÈCES

(30) Priorität: 17.03.2016 DE 102016104940
(43) Veröffentlichungstag der Anmeldung: 04.11.2020
(62) Teilanmeldung aus: 17711641.5
(73) Patentinhaber: Deutsches Zentrum für Luft- und Raumfahrt e.V., 51147 Köln (DE)
(72) Erfinder: WEITSCHAT, Roman, 81373 München (DE); HÖPPNER, Hannes, 13469 Berlin (DE)
(74) Vertreter: Ege Lee & Roider Patentanwälte

(56) Entgegenhaltungen:
- EP-A1- 1 566 246
- CN-U- 204 658 463
- DE-A1-102006 044 071
- DE-A1-102007 062 245
- DE-A1-102012 217 764
- DE-A1-102013 020 137
- DE-A1-102014 221 645
- DE-A1-102015 005 799
- DE-B4-102006 044 071
- DE-U1-202013 105 501
- JP-A- S6 339 786
- JP-A- H09 285 992
- US-A1- 2015 352 720

## Beschreibung

Die Erfindung betrifft eine Schutzvorrichtung für einen Effektor eines Manipulators, wobei die Schutzvorrichtung eine biegeschlaffe Hülle aufweist und die Hülle einen befüllbaren und/oder evakuierbaren Druckraum begrenzt. Außerdem betrifft die Erfindung eine Vorrichtung zum Manipulieren von Werkstücken, die Vorrichtung aufweisend einen Manipulator mit einem Effektor. Außerdem betrifft die Erfindung ein Verfahren zum Betätigen einer derartigen Vorrichtung.

Aus der DE 10 2012 007 242 A1 ist ein Überwachungssystem bekannt zur Gewährleistung einer sicheren Zusammenarbeit zwischen mindestens einem Arbeiter und mindestens einem Roboter in einem Mensch-Roboter-Kooperationssystem, welches den mindestens einen Roboter und mindestens einen Arbeitsplatz für den mindestens einen Arbeiter enthält, wobei das Überwachungssystem aufweist: eine Erkennungseinheit zum Erfassen einer Position des Arbeiters und/oder eines Bewegungsverhaltens mindestens eines Körperteils des Arbeiters; mindestens einen Überwachungssensor zum Festlegen und Überwachen mindestens eines Gefahrenbereichs um den Roboter, in welchem der Aufenthalt des Arbeiters nicht oder nur eingeschränkt erlaubt ist, und/oder zum Festlegen und Überwachen mindestens einer Begrenzung des Gefahrenbereichs sowie zur Detektion zumindest eines Bereichsübertritts des Arbeiters und/oder des Roboters in und/oder aus dem Gefahrenbereich; und eine Steuereinheit zur Verarbeitung der erfassten Position und/oder des erfassten Bewegungsverhaltens und mindestens eines gegebenenfalls detektierten Bereichsübertritts und zur Steuerung des Roboters in Abhängigkeit von der erfassten Position und/oder dem erfassten Bewegungsverhalten und dem gegebenenfalls detektierten Bereichsübertritt.

Aus der WO 2014/008929 A1 ist ein Verfahren bekannt zum Steuern eines Roboters, welcher in einem Arbeitsmodus betreibbar ausgestaltet ist, in welchem ein Teil des Roboters mit einer Geschwindigkeit bewegt wird, bei welcher ein Verletzungsrisiko für eine Person besteht, falls die Person mit dem Teil kollidiert, wobei der Arbeitsmodus deaktiviert wird, falls durch eine Sicherungseinrichtung erkannt wird, dass die Person in einen Aktionsbereich des beweglichen Teils eindringt, mit den Schritten: durch eine Sensoreinheit der Sicherungseinrichtung Ermitteln einer Position und einer Körperhaltung der Person, während sich die Person außerhalb des Aktionsbereichs des Teils befindet; durch eine Prädiktionseinheit der Sicherungseinrichtung Ermitteln eines Aktionsbereichs der Person, welcher durch Orte definiert ist, welche von der Person aus der ermittelten Körperhaltung heraus innerhalb eines vorgegebenen Zeitintervalls voraussichtlich erreichbar sind; durch eine Kollisionsüberwachungseinheit der Sicherungseinrichtung überprüfen, ob sich der Aktionsbereich der Person und der Aktionsbereich des beweglichen Teils überschneiden und gegebenenfalls Umschalten des Roboters vom Arbeitsmodus in einen Sicherheitsmodus, in welchem zur Vermeidung einer Verletzung der Person die Geschwindigkeit des Teils reduziert ist und/oder das Teil an der Person vorbeigeführt wird.

Aus der DE 10 2014 019 033 A1 ist ein Industrieroboter bekannt, der mit einem Menschen zusammenarbeitet und der eine Basiseinheit und eine bewegliche Einheit aufweist, die beweglich auf oder oberhalb der Basiseinheit vorgesehen ist, wobei der Roboter umfasst: ein Schutzelement, das aus einem Material mit einer Steifigkeit besteht, die niedriger als die Steifigkeiten der Basiseinheit und der beweglichen Einheit ist, wobei das Schutzelement einen Umfang von zumindest der beweglichen Einheit der Basiseinheit und die bewegliche Einheit abdeckt; und eine Erfassungseinrichtung, die zumindest auf der Basiseinheit oder der beweglichen Einheit vorgesehen ist, um eine externe Kraft zu erfassen, die durch das Schutzelement eingegeben wird.

Aus der DE 10 2006 044 071 A1 sind ein Roboter mit einer Manipulatoreinrichtung sowie eine Roboter-Schutzeinrichtung bekannt, die die Manipulatoreinrichtung zumindest teilweise umgibt, wobei das Volumen der Schutzeinrichtung zur Anpassung an die Arbeitsbedingungen und/oder zur Dämpfung eines Aufpralls durch Zuführen bzw. Ablassen eines Fluids veränderbar ist. Die Schutzeinrichtung kann einen kompressiblen Kunststoff aufweisen und elastisch eine Kollision dämpfen. Die Schutzeinrichtung kann mit einer Halteeinrichtung, die elastische Bänder aufweist, umgeben sein. Die Schutzeinrichtung kann einen Drucksensor zum Detektieren einer Druckänderung des Fluids aufweisen.

Das Dokument JP H09 285992 A betrifft eine Sicherheitsvorrichtung mit Hohlkörpern für einen Roboter. Wenn einer der Hohlkörper mit einem Werker in Kontakt kommt und daraufhin ein Druck in dem Hohlkörper einen vorbestimmten Wert übersteigt, wird der Roboter sofort angehalten. Aus dem Dokument JP H09 285992 A geht hervor, dass ein Hohlkörper drei Abschnitte aufweist, die miteinander kommunizierend verbunden sind. Eine Ausführung zufolge ist eine durchsichtige Schutzabdeckung vorgesehen, die ein Werkzeug umgibt. Die Schutzabdeckung ist mit einer Basis verbunden, wobei hinsichtlich der Basis auf den Hohlkörper verwiesen wird.

Der Erfindung liegt die Aufgabe zugrunde, eine eingangs genannte Schutzvorrichtung baulich und/oder funktional zu verbessern. Außerdem liegt der Erfindung die Aufgabe zugrunde, eine eingangs genannte Vorrichtung baulich und/oder funktional zu verbessern. Außerdem liegt der Erfindung die Aufgabe zugrunde, eingangs genannte Verfahren zu verbessern.

Die Lösung der Aufgabe erfolgt mit einer Schutzvorrichtung mit den Merkmalen des Anspruchs 1. Außerdem erfolgt die Lösung der Aufgabe mit einer Vorrichtung mit den Merkmalen des Anspruchs 4. Außerdem erfolgt die Lösung der Aufgabe mit einem Verfahren mit den Merkmalen des Anspruchs 5. Vorteilhafte Ausführungen und Weiterbildungen sind Gegenstand der abhängigen Ansprüche.

Die Schutzvorrichtung kann dazu dienen, einen und/oder vor einem Effektor zu schützen. Die Schutzvorrichtung kann dazu dienen, vor einem Effektor und ein an dem Effektor befindliches Werkstück und/oder vor einem Effektor und vor einem an dem Effektor befindlichen Werkstück zu schützen. Die Schutzvorrichtung kann dazu dienen, Menschen zu schützen. Der Effektor kann zum Handhaben, Montieren und/oder Bearbeiten von Werkstücken dienen. Der Effektor kann ein Greifer sein.

Die Hülle kann mehrere Kammern aufweisen. Die Kammern können einzeln und/oder gruppenweise voneinander fluiddicht getrennt sein. Einzelne und/oder gruppenweise voneinander fluiddicht getrennte Kammern können Druckräume bilden. Die Kammern können gruppenweise miteinander fluiddurchlässig kommunizierend verbunden sein. Zwischen den Kammern können fluiddichte Trennwände angeordnet sein. Die Kammern können einzeln oder gruppenweise austauschbar sein. Die Kammern können einzeln oder gruppenweise reparierbar sein.

Die Benutzerschnittstelle kann zur Informationsausgabe dienen. Die Benutzerschnittstelle kann zur Informationsausgabe an eine Bedienperson dienen. Eine Information kann eine Statusinformation sein. Eine Information kann sich darauf beziehen, ob ein Werkstück gegriffen oder nicht gegriffen ist. Eine Information kann sich auf einen Sicherheitszustand beziehen. Eine Information kann sich auf einen Fehler beziehen. Eine Information kann sich auf eine erforderliche Interaktion beziehen.

Die Benutzerschnittstelle kann ein Lichtmodul aufweisen. Das Lichtmodul kann zur Statusprojektion dienen. Das Lichtmodul kann wenigstens ein Leuchtmittel aufweisen. Das wenigstens eine Leuchtmittel kann eine LED sein. Das Lichtmodul kann eine elektrische/elektronische Steuereinrichtung aufweisen. Das Lichtmodul kann wenigstens einen elektrischen Leistungseingang aufweisen. Das Lichtmodul kann wenigstens einen elektrischen Energiespeicher aufweisen. Das Lichtmodul kann wenigstens einen elektrischen Signaleingang aufweisen. Das Lichtmodul kann wenigstens einen elektrischen Signalausgang aufweisen. Das Lichtmodul kann wenigstens ein Objektiv aufweisen.

Die Hülle kann mithilfe des Lichtmoduls zumindest abschnittsweise beleuchtbar sein. Das Lichtmodul kann innerhalb der Hülle angeordnet sein. Das Lichtmodul kann innen an der Hülle angeordnet sein. Die Hülle kann mithilfe des Lichtmoduls von innen beleuchtbar sein. Das Lichtmodul kann außerhalb der Hülle angeordnet sein. Das Lichtmodul kann außen an der Hülle angeordnet sein. Die Hülle kann mithilfe des Lichtmoduls von außen beleuchtbar sein.

Mithilfe des Lichtmoduls kann Licht unterschiedlicher Farbe erzeugbar sein. Mithilfe des Lichtmoduls kann Licht wechselnder Farbe erzeugbar sein. Mithilfe des Lichtmoduls kann rotes, blaues und/oder gelbes Licht erzeugbar sein. Mithilfe des Lichtmoduls können Mischfarben aus rotem, blauem und/oder gelbem Licht erzeugbar sein. Mithilfe des Lichtmoduls können zeitliche Lichtmuster erzeugbar sein. Mithilfe des Lichtmoduls kann blinkendes Licht und/oder Dauerlicht erzeugbar sein. Mithilfe des Lichtmoduls können Kommunikationszeichen darstellbar sein. Kommunikationszeichen können Grafiken und/oder Abbildungen sein.

Die Hülle kann zumindest abschnittsweise transparent oder transluzent sein.

Die Benutzerschnittstelle kann zur Informationseingabe dienen. Die Benutzerschnittstelle kann zur Informationseingabe an die Schutzvorrichtung dienen. Die Benutzerschnittstelle kann zur Informationseingabe an die Vorrichtung zum Manipulieren von Werkstücken dienen.

Die Benutzerschnittstelle kann eine Tastatur, ein Touchpad und/oder ein Touchscreen aufweisen. Die Tastatur, das Touchpad und/oder das Touchscreen können/kann außenseitig an der Hülle angeordnet sein. Die Tastatur, das Touchpad und/oder das Touchscreen können/kann mit der Hülle fest verbunden sein. Die Tastatur, das Touchpad und/oder das Touchscreen können/kann flexibel sein. Die Tastatur, das Touchpad und/oder das Touchscreen können/kann biegbar sein. Die Tastatur, das Touchpad und/oder das Touchscreen können/kann faltbar sein. Die Tastatur, das Touchpad und/oder das Touchscreen können/kann mehrere Eingabeabschnitte aufweisen. Die Tastatur, das Touchpad und/oder das Touchscreen können/kann Gelenke aufweisen. Die Tastatur, das Touchpad und/oder das Touchscreen können/kann Symbole, Ziffern und/oder Buchstaben aufweisen.

Die Schutzvorrichtung weist eine biegeschlaffe Hülle auf. Die Hülle begrenzt wenigstens einen befüllbaren und/oder evakuierbaren Druckraum.

Die Hülle kann einen niedrigen Elastizitätsmodul aufweisen. Die Hülle kann eine geringe Dehnsteifigkeit aufweisen. Die Hülle kann bei Kraft- und/oder Momentbeanspruchung stark verformbar sein. Die Hülle kann aus einem textilen Material hergestellt sein. Die Hülle kann aus einem Gewebe hergestellt sein. Die Hülle kann aus Polyamid hergestellt sein. Die Hülle kann eine Innenseite aufweisen. Die Innenseite kann dem Druckraum zugewandt sein. Die Hülle kann eine Außenseite aufweisen.

Der Druckraum kann mit einem Gas, insbesondere Luft, befüllbar sein. Der Druckraum kann zumindest annähernd gasdicht, insbesondere luftdicht, sein. Die Hülle kann aufblasbar sein. Aus dem Druckraum kann Gas, insbesondere Luft, absaugbar sein. Der Druckraum kann wenigstens einen Einlass aufweisen. Der Druckraum kann wenigstens einen Auslass aufweisen. Der Druckraum kann wenigstens einen kombinierten Ein-/Auslass aufweisen.

Die Schutzvorrichtung kann ein Beaufschlagungsmodul zum Befüllen und/oder Evakuieren des Druckraums aufweisen. Das Beaufschlagungsmodul kann eine Druckerzeugungsvorrichtung aufweisen. Die Druckerzeugungsvorrichtung kann zum Erzeugen von Über- und/oder Unterdruck dienen. Das Beaufschlagungsmodul kann eine Pumpe, insbesondere eine Hubkolbenpumpe, aufweisen. Die Pumpe kann in einem Druckbetrieb und/oder in einem Saugbetrieb betreibbar sein. Das Beaufschlagungsmodul kann wenigstens ein Ventil aufweisen. Das wenigstens eine Ventil kann elektrisch, elektromotorisch, elektromagnetisch und/oder pneumatisch betätigbar sein. Das Beaufschlagungsmodul kann eine Kontrolleinrichtung zum Kontrollieren des wenigstens einen Ventils aufweisen. Die Kontrolleinrichtung kann eine elektrische Kontrolleinrichtung sein.

Die Hülle kann zumindest abschnittsweise elastisch sein. Die Hülle kann zumindest abschnittsweise gummielastisch sein. Die Hülle kann zumindest abschnittsweise eine vorbestimmte Elastizität aufweisen. Die Hülle kann wenigstens einen Abschnitt mit einer höheren Elastizität und wenigstens einen Abschnitt mit einer geringeren Elastizität aufweisen. Die Hülle kann zumindest abschnittsweise verstärkt sein. Die Hülle kann wenigstens ein Verstärkungselement aufweisen. Das wenigstens eine Verstärkungselement kann aus einem Kunststoff, aus einem Metall, aus Leder und/oder aus einem sonstigen Verstärkungsmaterial hergestellt sein. Das wenigstens eine Verstärkungselement kann eine plattenartige Form aufweisen. Das wenigstens eine Verstärkungselement kann eine schalenartige Form aufweisen. Das wenigstens eine Verstärkungselement kann an einer vorbestimmen Stelle angeordnet sein. Das wenigstens eine Verstärkungselement kann an einer Innenseite der Hülle angeordnet sein.

Die Hülle kann bei befülltem Druckraum eine doppelwandige Form aufweisen. Der befüllte Druckraum kann einen ringförmigen Querschnitt aufweisen. Die Hülle kann bei befülltem Druckraum eine haubenartige Form aufweisen. Die Hülle kann bei befülltem Druckraum eine tonnenartige Form aufweisen. Die Hülle kann bei evakuiertem Druckraum eine rundschalartige Form aufweisen. Die Hülle kann einen festen Endabschnitt und einen freien Endabschnitt aufweisen. Die Hülle kann aus einem Teil hergestellt sein. Die Hülle kann mehrere miteinander verbundene Teile aufweisen.

Die Hülle kann eine faltbare Wabenstruktur aufweisen. Die Hülle kann zumindest abschnittsweise aus Holzstoff, Zellstoff, Halbzellstoff und/oder Altpapier hergestellt sein. Die Hülle kann zumindest abschnittsweise aus Papier oder Pappe hergestellt sein.

Das wenigstens eine erste Zugmittel dient zum Übertragen von Zugkräften. Das wenigstens eine erste Zugmittel kann eine geringe Elastizität aufweisen. Das wenigstens eine erste Zugmittel kann mit einem Ende mit der Hülle zugfest verbunden sein.

Der wenigstens eine Aktuator kann eine Kolben-Zylinder-Anordnung aufweisen.

Der wenigstens eine Aktuator kann pneumatisch betätigbar sein. Der wenigstens eine Aktuator kann elektromotorisch oder elektromagnetisch betätigbar sein. Das wenigstens eine erste Zugmittel kann mit einem Ende mit dem wenigstens einen Aktuator zugfest verbunden sein.

Das wenigstens eine erste Zugmittel kann zumindest abschnittsweise elastisch sein. Das wenigstens eine erste Zugmittel kann zumindest abschnittsweise federelastisch sein. Das wenigstens eine erste Zugmittel kann zumindest abschnittsweise gummielastisch sein. Das wenigstens eine erste Zugmittel kann zumindest abschnittsweise als elektroaktives Polymer ausgeführt sein.

Die Schutzvorrichtung kann wenigstens ein zweites Zugmittel aufweisen, um die Hülle bei befülltem Druckraum in einer räumlich vorbestimmten Form zu stabilisieren. Das wenigstens eine zweite Zugmittel kann zum Übertragen von Zugkräften dienen. Das wenigstens eine zweite Zugmittel kann eine geringe Elastizität aufweisen. Das wenigstens eine zweite Zugmittel kann eine vorbestimmte Länge aufweisen. Das wenigstens eine zweite Zugmittel kann mit beiden Enden mit der Hülle zugfest verbunden sein.

Die Schutzvorrichtung kann wenigstens einen Drucksensor zum Erfassen eines Drucks in dem Druckraum aufweisen. Der wenigstens eine Drucksensor kann mit der Kontrolleinrichtung zum Kontrollieren des wenigstens einen Ventils signalleitend verbunden sein.

Die Schutzvorrichtung kann ein Befestigungsmodul und eine Hülle aufweisen. Das Befestigungsmodul kann auch als Flansch oder Airbagflansch bezeichnet werden. Die Hülle kann auch als Airbag bezeichnet werden. Das Befestigungsmodul und die Hülle können miteinander zerstörungsfrei lösbar verbunden sein. Das Befestigungsmodul und die Hülle können miteinander mithilfe einer Schnellwechselkupplung verbunden sein. Das Befestigungsmodul und die Hülle können miteinander mithilfe einer Schraubverbindung verbunden sein. Das Befestigungsmodul und die Hülle können miteinander mithilfe einer Bajonettverbindung verbunden sein. Das Befestigungsmodul und die Hülle können miteinander luftdicht verbunden sein. Das Befestigungsmodul kann eine ringartige Form aufweisen. Das Befestigungsmodul kann zur festen Anordnung an einem Manipulator, insbesondere an einem Verbindungsbereich für einen Effektor, dienen. Das Lichtmodul kann an dem Befestigungsmodul angeordnet sein.

Die Vorrichtung kann ein Industrieroboter sein. Die Vorrichtung kann eine elektrische/elektronische Steuereinrichtung aufweisen. Die Steuereinrichtung der Vorrichtung und die Steuereinrichtung des Lichtmoduls können miteinander signalleitend verbunden sein. Der Manipulator kann wenigstens einen Armabschnitt aufweisen. Der Manipulator kann wenigstens ein Gelenk aufweisen. Der Manipulator kann bewegbar sein. Der Manipulator kann programmiert bewegbar sein. Der Manipulator kann ein Roboterarm sein. Der Manipulator kann ein Arm eines Industrieroboters sein. Der Manipulator kann ein freies Ende aufweisen. An dem freien Ende des Manipulators kann ein Anschlussabschnitt für den Effektor angeordnet sein. Der Effektor kann einen korrespondierenden Anschlussabschnitt aufweisen. Der Manipulator und der Effektor können miteinander in einem Verbindungsbereich verbunden sein. Der Manipulator kann Drehmomentsensoren aufweisen. Signale der Drehmomentsensoren können der Schutzvorrichtung zur Verfügung stehen.

Die Schutzvorrichtung kann an dem Verbindungsbereich angeordnet sein. Die Schutzvorrichtung kann an dem Effektor verbindungsbereichsseitig angeordnet sein. Bei befülltem Druckraum kann die Hülle den Effektor zumindest annähernd vollständig umschließen. Bei befülltem Druckraum kann die Hülle den Effektor zumindest seitlich umschließen. Bei befülltem Druckraum kann die Hülle den Effektor haubenartig umschließen. Bei befülltem Druckraum kann die Hülle einen einseitig offenen Schutzraum für den Effektor bilden.

An dem Effektor können vorgegebene Mindestradien eingehalten werden. An dem Effektor können vorgegebene Mindestradien eingehalten werden, um eine Beschädigung der Hülle zu vermeiden.

Der Druckraum kann befüllt werden, um die Hülle aufzublasen. Der Druckraum kann evakuiert werden, um die Hülle einzuziehen. Das wenigstens eine erste Zugmittel kann freigegeben werden, wenn eine Manipulation eines Werkstücks nicht vorgesehen ist. Das wenigstens eine erste Zugmittel kann mithilfe des Aktuators mit einer Zugkraft beaufschlagt werden, wenn eine Manipulation eines Werkstücks vorgesehen ist. Das wenigstens eine erste Zugmittel kann mit einer Zugkraft beaufschlagt werden, um ein Einziehen der Hülle zu unterstützen.

Ein Druck in dem Druckraum kann erfasst werden, um einen Druck in dem Druckraum zu kontrollieren. Der Druckraum kann weiter befüllt werden, wenn ein vorgegebener Druckwert noch nicht erreicht ist. Ein Befüllen des Druckraums kann beendet werden, wenn ein vorgegebener Druckwert erreicht wird. Wenn ein vorgegebener Druckwert erreicht wird, kann ein Freigabesignal ausgegeben werden. Das Freigabesignal kann dazu dienen, eine Bewegung des Manipulators oder eine Bewegung mit einer erhöhten Geschwindigkeit freizugeben. Ein Druck in dem Druckraum kann erfasst werden, um eine Kollision festzustellen. Eine Kollision kann festgestellt werden, wenn ein vorgegebener Druckwert überschritten wird. Wenn ein vorgegebener Druckwert überschritten wird, kann ein Fehlersignal ausgegeben werden. Das Fehlersignal kann dazu dienen, ein sofortiges Anhalten einzuleiten.

Die Statusinformation kann sich auf ein Werkstück, die Hülle, einen Sicherheitszustand, einen Fehlerzustand und/oder eine erforderliche Interaktion beziehen. Die Statusinformation kann mithilfe des Lichtmoduls signalisiert werden.

Die Statusinformation kann mithilfe einer vorbestimmten Farbe oder Farbkombination signalisiert werden. Die Statusinformation kann mithilfe eines vorbestimmten zeitlichen Lichtmusters signalisiert werden. Die Statusinformation kann mithilfe eines vorbestimmten Kommunikationszeichens signalisiert werden.

Das Wechselerfordernis der Hülle kann abhängig von einer Benutzung und/oder zeitabhängig signalisiert werden. Eine Benutzung der Hülle kann ein Aufblasen und/oder Zurückziehen der Hülle beinhalten. Eine Anzahl von Benutzungsvorgängen kann gezählt werden. Ein Wechselerfordernis der Hülle kann nach einer vorbestimmten Anzahl von Benutzungsvorgängen signalisiert werden. Eine Anzahl von Benutzungsvorgängen kann mit einem vorgegebenen Grenzwert verglichen werden. Bei Überschreiten des vorgegebenen Grenzwerts kann ein Wechselerfordernis der Hülle signalisiert werden. Eine Benutzungsdauer der Hülle kann erfasst werden. Ein Wechselerfordernis der Hülle kann nach einer vorbestimmten Benutzungsdauer signalisiert werden. Eine Benutzungsdauer kann mit einem vorgegebenen Grenzwert verglichen werden. Bei Überschreiten des vorgegebenen Grenzwerts kann ein Wechselerfordernis der Hülle signalisiert werden.

Die Hülle kann eindeutig identifizierbar sein. Die Hülle kann eindeutig identifizierbar sein, um Informationen, insbesondere Benutzungsinformationen, über die Hülle der Hülle zuzuordnen. Die Hülle kann elektronisch und/oder mechanisch identifizierbar sein. Die Hülle kann einen codierten Transponder aufweisen. Die Hülle kann einen RFID-Transponder aufweisen. Das Befestigungsmodul kann ein Lesegerät aufweisen. Das Befestigungsmodul kann zum Identifizieren der Hülle dienen. Das Befestigungsmodul kann ein RFID-Lesegerät aufweisen. Das Lichtmodul kann zum Identifizieren der Hülle dienen. Das Lichtmodul und das Befestigungsmodul können miteinander signalleitend verbunden sein.

Zusammenfassend und mit anderen Worten dargestellt ergibt sich somit durch die Erfindung unter anderem ein Robotersicherheitsmodul mit Vakuum-Druckluft-Airbag für Roboter-Mensch-Interaktion.

Es kann ein mit Druckluft gefüllter Airbag bereitgestellt werden. Der Airbag kann durch seine Form unterschiedlichste Endeffektoren oder Werkzeuge an einem Roboter-Tool-Center-Point voll oder teilweise umschließen. Damit können bei Kollisionen mit einem Mensch oder mit Gegenständen Verletzungen bzw. Beschädigungen verhindert oder stark verringert werden. Der Airbag kann um das Werkzeug oder auch um einen Greifer mit einem gegriffenen Werkstück herum ragen und somit harte und scharfe Kanten abdecken und einen Schutzpuffer zwischen Mensch und Werkzeug/Werkstück bilden. In Abhängigkeit eines Drucks kann ein Härtegrad eingestellt werden. Bei Klemmungen kann der Airbag als Pufferzone und/oder Schutz für den Mensch verwendet werden. Durch Ablassen von Luft kann eine Klemmung gelöst werden. Der Airbag ist derart angeordnet, dass ein Werkzeug bzw. zu fügendes Werkstück an Manipulationsstellen nicht behindert wird. In den Airbag können Seile und/oder Führungsstrukturen integriert sein. Durch Vakuum kann Luft aus dem Airbag entfernt werden. Durch Überdruck in Vakuumkammern können Zylinder in eine Richtung bewegt werden, die Führungsseile soweit nach oben ziehen, dass der Airbag aus einem Arbeitsbereich entfernt wird und eine Manipulation ohne Störungen durchgeführt werden kann.

Das System kann in einen Flansch und einen Luftsack aufgeteilt sein. Der Luftsack kann dabei durch einen luftdichten Bajonettverschluss oder ähnliche Schnellwechselkupplungen einfach auswechselbar sein. Der Luftsack kann nach einer vorher festgelegten Anzahl von Aktivierungen und Deaktivierungen bzw. einer stärkeren Kollision einfach und schnell ausgetauscht werden.

In einer Elektronik kann eine maximal zulässige Anzahl an Aktivierungs- und Deaktivierungsvorgängen, bis zu der eine Sicherheit des Systems gewährleistet werden kann, vorab hinterlegt, von der Elektronik gezählt und mit einem Grenzwert abgeglichen werden. Sollte dieser Grenzwert erreicht sein, so kann entweder die Elektronik die Aktivierung sperren, bis ein neuer Luftsack angebracht wurde. Hierzu kann eine Einrichtung vorgesehen sein, welche erkennt, ob ein angebrachter Luftsack noch verwendet werden darf. Beispielsweise kann dies über einen RFID-Tag im Luftsack erfolgen, welcher von der Elektronik erfasst werden kann und dem Luftsack eine eindeutige Identität zuweist. Die Elektronik kann mit dem Internet verbindbar sein und somit Zugriff auf eine externe Datenbank zum Abgleich von Daten haben. Die Elektronik kann über das Lichtmodul einem Nutzer durch eine vorbestimmte Farbkombination mitteilen, dass ab sofort eine Sicherheit nicht mehr gewährleistet wird.

Die Druckluftzuführung kann über einen Zylinderkolben, welcher den notwendigen Druck bereitstellt, ausgeführt sein. Dieser kann bei Zurückziehen gegebenenfalls auch die Luft wieder aus dem Luftsack entfernen und diesen vakuumieren. Dabei kann das Volumen des Zylinderkolbens so ausgelegt sein, dass ein geeigneter Druck auf den Luftsack aufgebracht werden kann.

Zum Schutz vor scharfen Kanten von Werkstück und Greifer kann eine honigwabenförmige Zellstruktur aus Papier, welche dadurch auf geringe Größe faltbar ist, um den Endeffektor angeordnet werden. Ein Öffnen und Schließen kann dabei durch einen Aktuator, beispielsweise durch einen elektromagnetischen Motor, erfolgen. Es können verschiedene Sensoriken vorgesehen sein. Eine, die zuverlässig überwacht, ob die Schutzeinrichtung vollständig geöffnet oder geschlossen ist. Und eine andere Sensorik, welche eine Kollision mit einem Menschen erkennt. Ein einfacher Austausch der sicherheitsrelevanten Komponenten durch eine Schnellwechseleinrichtung bzw. eine Überwachung der Anzahl an Aktivierung und der Abgleich mit einem Schwellwert kann erfolgen.

Das Sicherheitsmodul kann ein Lichtmodul zur Statusprojektion und Informationsübermittlung aufweisen. Gerade bei aufgeblasenem Airbag kann dieses Lichtmodul den Airbag in verschiedenen Farben leuchten lassen. Farben können bspw. sein Rot, Blau, Gelb, Grün, sowie Mischungen der Farben. Das Licht kann zudem blinken oder auch dauerhaft leuchten. Statusinformation können sein: Werkstück gegriffen oder nicht, Sicherheit gewährleistet oder nicht, Fehlfunktion, warten auf Interaktion. Ferner ist es denkbar, die gesamte Oberfläche des Airbags als Projektionsfläche zu nutzen, um hier Graphiken, Abbildungen oder dergleichen darzustellen. Zusätzlich kann im Airbag ein taktiles Interface untergebracht sein. Dieses taktile Interface ist vorzugsweise biegbar, sodass das Interface bei deaktiviertem Airbag dem Zusammenziehen des Airbags folgen kann. Das taktile Interface kann dabei in verschiedene Zonen unterteilt bzw. aus mehreren taktilen Knöpfen ausgebildet sein, sodass verschiedene Kommandos vom Menschen an den Roboter über das taktile Interface übertragen werden können. Der Mensch kann dazu eine der Tasten, repräsentiert durch die taktile Sensorik auf dem aufgeblasenen Airbag, drücken. Diese Tasten können verschiedene Roboter-, Airbag- oder auch Greiferfunktionen symbolisieren aber auch Zahlenfelder zur Eingabe von Variablen.

Ein Robotersicherheitssystem kann einen Airbag aufweisen, welcher zusätzlich über ein Lichtmodul in verschiedenen Farben leuchten kann. Diese Farben können verschiedene Statusinformationen des Greifers suggerieren. Beispielsweise ob der Greifer bei aktiviertem Airbag ein Werkstück gegriffen hat oder nicht oder ob es eine Fehlfunktion des Airbags gibt. Ferner kann ein "Warten auf Interaktion" oder die Statusinformation "Sicherheit gewährleistet" über das Lichtmodul dem Benutzer mitgeteilt werden. Der Airbag kann mit einer flexiblen taktilen Sensorik ausgestattet sein, welche bei Drücken verschiedene Roboter-, Airbag- oder Greiferfunktionalitäten realisiert. Beispielsweise kann der Greifer über das Tastenfeld geöffnet oder geschlossen werden, der Airbag deaktiviert werden, der Roboter kalibriert werden, eine Trajektorie eingelernt werden oder der Roboter in den Zero-Gravity-Modus geschaltet werden.

Das Lichtmodul kann LEDs und eine Elektronik aufweisen. Das Lichtmodul kann in einem Airbagflansch mit untergebracht sein. Beispielsweise kann ein grün angestrahlter Airbag bedeuten, dass die Sicherheit des gesamten Robotersystems bestehend aus Roboter und Sicherheitsmodul gewährleistet ist, der Roboter kann in einem Mensch-Maschine-Kollaborationsszenario betrieben werden und der Mensch darf sich im Arbeitsraum aufhalten, ohne dass der Roboter anhält. Im Gegensatz dazu kann ein rot angestrahltes Sicherheitsmodul bedeuten, dass die Sicherheit nicht gewährleistet ist und der Mensch sich nicht im Arbeitsraum aufhalten darf, sonst stoppt der Roboter. Dies ist beispielsweise denkbar, falls der Roboter in verschiedenen Geschwindigkeiten betrieben wird. Rot blinkend wiederum kann einem Menschen suggerieren, dass der Roboter sich in einem Fehlerstatus befindet und aufgrund eines Defekts ausgeschaltet wurde. Zusätzlich kann eine Differenzierung zwischen dauerhaft grün leuchtend und grün blinkend dem Benutzer mitteilen, ob der Roboter ein Werkstück gegriffen hat oder nicht. Also ob er gerade mit oder ohne Werkstück verfährt.

Der Roboter des Robotersystems kann mit einer Drehmomentensensorik ausgestattet sein, welche eine Interaktion mit dem Menschen zulässt, sodass einem handgeführten Roboter eine Trajektorie einprogrammiert werden kann. Dabei kann ein blaues Licht dem Menschen mitteilen, dass der Roboter auf eine Interaktion, beispielsweise das Einlernen einer Trajektorie oder der Eingabe eines Kommandos, über die Benutzerschnittstelle wartet.

Die Benutzerschnittstelle kann mit einem Tastenfeld bestehend aus x Tasten ausgeführt sein. Die Tasten können beispielsweise zum Schalten eines Zero-Gravity-Modus, einer Roboterkalibration, ein Einlernen einer Trajektorie, ein Öffnen und Schließen eines Greifers sowie einer Deaktivierung des schützenden Airbags beim Aufzeichnen eines Bewegungsablaufes dienen. Die Elektronik dazu kann in einem Airbagflansch untergebracht sein. Der Airbag kann für das Drücken der Tasten aufgeblasen sein. Bei Drücken der Zero-Gravity-Modus-Taste kann der Roboter im Anschluss nachgiebig mit der Hand rumgeführt werden. Bei Drücken der Roboterkalibrationstaste kann dem Menschen beispielsweise durch blaues Blinken suggeriert werden, dass er den Roboter im Anschluss nicht berühren darf, da dieser sich nun selber kalibriert. Ein Sensor-Offsets kann in dieser Phase bestimmt werden. Nach Drücken der Taste zum Einlernen einer Trajektorie kann der Roboter im Anschluss rumgeführt werden und die entsprechende Trajektorie wird eingelernt und abgespeichert. Bei Drücken der Greifertaste kann sich der Greifer öffnen bzw. schließen, je nachdem in welchem Status er sich gerade befindet. Nach Drücken der Airbag-Deaktivierungstaste kann der Airbag deaktiviert werden.

Mit der Erfindung wird eine Sicherheit erhöht. Ein Verletzungsrisiko wird reduziert. Ein Beschädigungsrisiko wird reduziert. Sich überschneidende Arbeitsbereiche Mensch/Roboter werden ermöglicht. Eine Arbeitsgeschwindigkeit ist erhöhbar. Ein Aufwand, wie Kosten-, Bau-, Sensorik- und/oder Rechenaufwand, wird reduziert. Fehlauslösungen von Schutzsystemen werden vermieden. Es wird ein Schutz vor einem Effektor ermöglicht. Es wird ein Schutz vor einem Effektor und einem an dem Effektor befindlichen Werkstück ermöglicht. Eine Mensch-Roboter-Kollaboration wird verbessert. Auch bei geschütztem Effektor kann ein Effektorstatus signalisiert werden. Eine Produktion wird verbessert. Ein Kollisionsschutz ist auch bei einem Defekt einer Kammer gegeben. Bei einem Defekt einer Kammer kann eine Reparatur vereinfacht erfolgen. Die Druckräume der Hülle können voneinander unabhängig befüllbar und/oder evakuierbar sein.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Greifer für einen Industrieroboter mit einer Schutzvorrichtung mit einer Hülle und elastischen Zugmitteln,
- Fig. 2: einen Greifer für einen Industrieroboter mit einer Schutzvorrichtung mit einer Hülle, Zugmitteln und Aktuatoren,
- Fig. 3: einen Industrieroboter mit einem Greifer und einer Schutzvorrichtung in aufgeblasenem Zustand,
- Fig. 4: einen Industrieroboter mit einem Greifer und einer Schutzvorrichtung in zurückgezogenem Zustand und
- Fig. 5: einen Industrieroboter mit einem Greifer und einer Schutzvorrichtung mit einer informationstechnischen Benutzerschnittstelle.

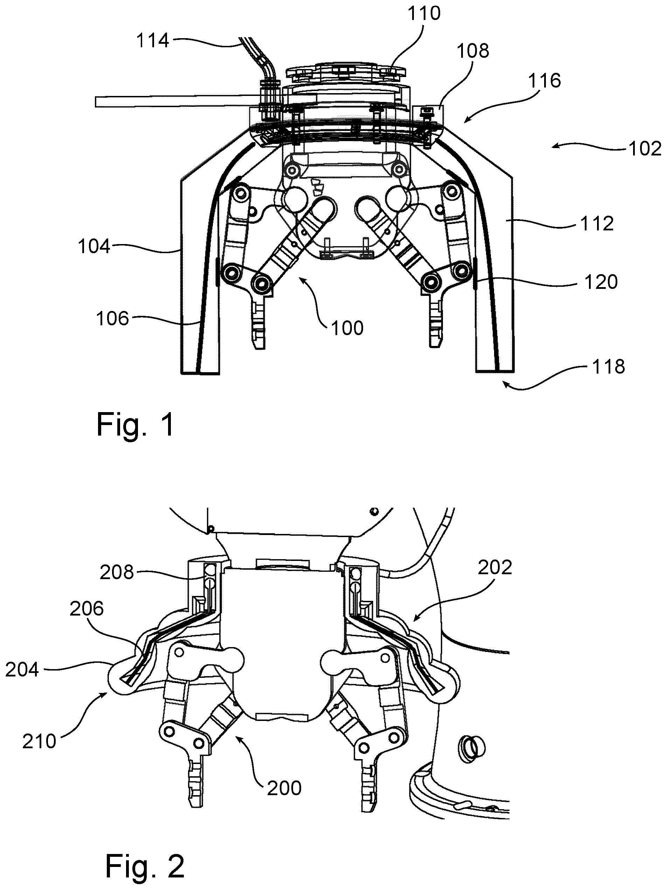

Fig. 1 zeigt einen Greifer 100 für einen Industrieroboter mit einer Schutzvorrichtung 102 mit einer Hülle 104 und elastischen Zugmitteln, wie 106. Die Schutzvorrichtung 102 dient dazu, einen mit dem Industrieroboter in dessen Arbeitsbereich kooperierenden Menschen vor dem Greifer 100 und gegebenenfalls einem gegriffenen Werkstück zu schützen.

Die Schutzvorrichtung 102 weist einen ringförmigen Befestigungsabschnitt 108 zur Befestigung an dem Greifer 100 auf. Der Greifer 100 weist einen Anschlussflansch 110 zur Verbindung mit einem korrespondierenden Anschlussflansch eines Industrieroboters auf. Die Schutzvorrichtung 102 ist mit ihrem Befestigungsabschnitt 108 an dem Greifer 100 in der Nähe des Anschlussflanschs 110 befestigt.

Die Hülle 104 ist biegeschlaff und begrenzt einen befüllbaren und/oder evakuierbaren Druckraum 112. In dem Befestigungsabschnitt 108 ist ein Luftverteilkanal angeordnet. Der Druckraum 112 und der Luftverteilkanal sind miteinander kommunizierend verbunden. An dem Befestigungsabschnitt 108 ist ein Luftschlauch 114 angeordnet. Der Luftschlauch 114 ist mit dem Luftverteilkanal kommunizierend verbunden. Über den Luftschlauch 114 und den Luftverteilkanal kann der Druckraum 112 mit Luft befüllt werden und/oder kann aus dem Druckraum 112 Luft abgesaugt werden.

Die Hülle 104 weist einen festen, mit dem Befestigungsabschnitt 108 dicht verbundenen Endabschnitt 116 und einen freien Endabschnitt 118 auf. Die elastischen Zugmittel 106 sind in dem Druckraum 112 angeordnet. Vorliegend sind die Zugmittel 106 als Gummibänder ausgeführt. Die Zugmittel 106 sind jeweils mit einem Ende mit dem Befestigungsabschnitt 108 und mit einem anderen Ende an dem freien Endabschnitt 118 mit der Hülle 104 zugfest verbunden. An Bereichen, die bei befülltem Druckraum 112 an dem Greifer 100 anliegen, weist die Hülle 104 Verstärkungselemente, wie 120, auf. Die Verstärkungselemente 120 sind vorliegend aus einem Kunststoff hergestellt.

Fig. 2 zeigt einen Greifer 200 für einen Industrieroboter mit einer Schutzvorrichtung 202 mit einer befüllbaren und/oder evakuierbaren Hülle 204, Zugmitteln, wie 206, und Aktuatoren, wie 208. Die Zugmittel 206 sind jeweils mit einem Ende mit einem Aktuator 208 und mit einem anderen Ende an dem freien Endabschnitt 210 mit der Hülle 204 zugfest verbunden. Vorliegend weisen die Zugmittel 206 eine geringe Elastizität auf und dienen zum Übertragen von Zugkräften von den Aktuatoren 208 auf die Hülle 204. Die Aktuatoren 208 dienen zum Beaufschlagen der Zugmittel 206 mit einer Zugkraft und weisen jeweils eine pneumatisch betätigbare Kolben-Zylinder-Anordnung auf. Im Übrigen wird ergänzend insbesondere auf Fig. 1 und die zugehörige Beschreibung verwiesen.

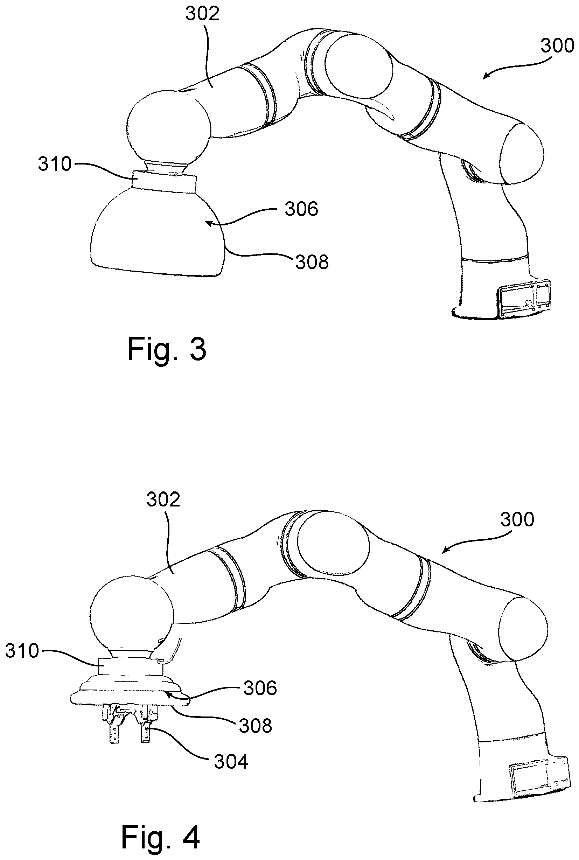

Fig. 3 zeigt einen Industrieroboter 300 mit einem Manipulator 302, einem Greifer 304 und einer Schutzvorrichtung 306, wie Schutzvorrichtung 102 gemäß Fig. 1 oder Schutzvorrichtung 202 gemäß Fig. 2, in aufgeblasenem Zustand. Fig. 4 zeigt den Industrieroboter 300 mit Schutzvorrichtung 306 in zurückgezogenem Zustand. Bei befülltem Druckraum ist die Hülle 308 aufgeblasen und umschließt den Greifer 304, wie in Fig. 3 gezeigt, haubenartig. Bei evakuiertem Druckraum ist die Hülle 308 zurückgezogen und an dem Befestigungsabschnitt 310 der Schutzvorrichtung 306, wie in Fig. 4 gezeigt, rundschalartig zusammengefaltet angeordnet. Bei einem Betrieb des Industrieroboters 300 wird die Hülle 308 zurückgezogen, wenn mithilfe des Greifers 304 ein Werkstück aufgenommen oder abgelegt wird, und aufgeblasen, wenn der Manipulator 302 mit dem Greifer 304 mit oder ohne Werkstück bewegt wird. Ein Zurückziehen der Hülle 308 wird durch die Zugmittel sowie gegebenenfalls Aktuatoren unterstützt. Im Übrigen wird ergänzend insbesondere auf Fig. 1 und Fig. 2 sowie die zugehörige Beschreibung verwiesen.

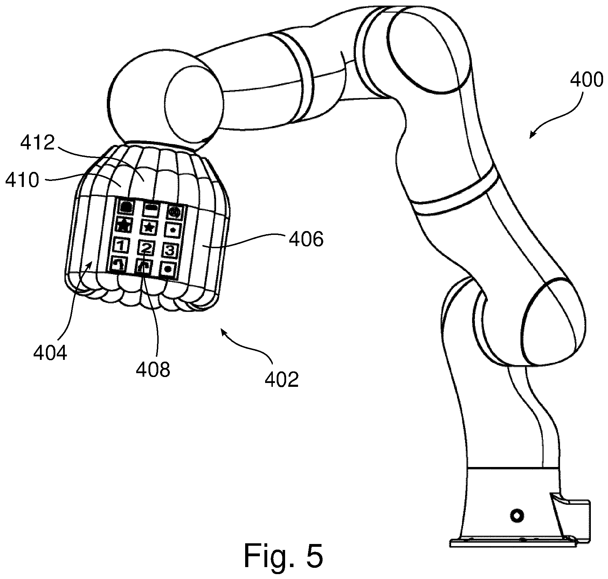

Fig. 5 zeigt einen Industrieroboter 400 mit einem Greifer und einer Schutzvorrichtung 402 für einen Effektor mit einer informationstechnischen Benutzerschnittstelle 404. Die Benutzerschnittstelle 404 dient sowohl zur Informationsausgabe als auch zur Informationseingabe.

Die Hülle 406 weist mehrere Kammern, wie 410, 412, auf. Die Kammern 410, 412 sind voneinander fluiddicht getrennt und bilden voneinander getrennte Druckräume. Bei einem Defekt, insbesondere Beschädigung und/oder Undichtigkeit einzelner Kammern 410, 412 bleibt eine Grundsicherheit erhalten. Die Kammern 410, 412 einzeln ausgetauscht oder repariert werden.

Zur Informationsausgabe weist die Schutzvorrichtung 402 ein Lichtmodul auf. Das Lichtmodul ist innerhalb der Hülle 406 angeordnet. Die Hülle 406 ist aus einem transluzenten Material hergestellt. Die Hülle 406 ist mithilfe des Lichtmoduls von innen unterschiedlich farbig beleuchtbar. Damit können beispielsweise Statusinformationen, ein Sicherheitszustand, ein Fehler oder eine erforderliche Interaktion signalisiert werden.

Zur Informationsausgabe weist die Schutzvorrichtung 402 vorliegend ein Touchpad 408 auf. Das Touchpad 408 ist außenseitig an der Hülle 406 angeordnet und mit der Hülle 406 fest verbunden. Das Touchpad 408 ist derart flexibel, dass die Hülle 406 mit dem Touchpad 408 von dem Effektor zurückgezogen werden kann. Das Touchpad 408 weist vorliegend Symbole und Ziffern auf.

Im Übrigen wird ergänzend insbesondere auf Fig. 1 und Fig. 2, auf Fig. 3 und Fig. 4 sowie die zugehörige Beschreibung verwiesen.

### Bezugszeichen

- 100: Effektor, Greifer
- 102: Schutzvorrichtung
- 104: Hülle
- 106: Zugmittel
- 108: Befestigungsabschnitt
- 110: Anschlussflansch
- 112: Druckraum
- 114: Luftschlauch
- 116: Endabschnitt
- 118: Endabschnitt
- 120: Verstärkungselement

- 200: Effektor, Greifer
- 202: Schutzvorrichtung
- 204: Hülle
- 206: Zugmittel
- 208: Aktuator
- 210: Endabschnitt

- 300: Industrieroboter
- 302: Manipulator
- 304: Effektor, Greifer
- 306: Schutzvorrichtung
- 308: Hülle
- 310: Befestigungsabschnitt

- 400: Industrieroboter
- 402: Schutzvorrichtung
- 404: Benutzerschnittstelle
- 406: Hülle
- 408: Touchpad
- 410: Kammer
- 412: Kammer

## Patentansprüche

1. Schutzvorrichtung (102, 202, 306, 402) für einen Effektor (100, 200, 304) eines Manipulators (302), wobei die Schutzvorrichtung (102, 202, 306, 402) eine biegeschlaffe Hülle (104, 204, 308, 406) aufweist und die Hülle (104, 204, 308, 406) einen befüllbaren und/oder evakuierbaren Druckraum (112) begrenzt, **dadurch gekennzeichnet, dass** die Schutzvorrichtung (102, 202, 306, 402) wenigstens ein erstes Zugmittel (106, 206) zum Zurückziehen der Hülle (104, 204, 308, 406) und wenigstens einen Aktuator (208) zum Beaufschlagen des wenigstens einen ersten Zugmittels (206) mit einer Zugkraft aufweist.

2. Schutzvorrichtung (102, 202, 306, 402) nach Anspruch 1, **dadurch gekennzeichnet, dass** die Schutzvorrichtung (102, 202, 306, 402) ein Befestigungsmodul aufweist und das Befestigungsmodul und die Hülle (104, 204, 308, 406) miteinander zerstörungsfrei lösbar verbunden sind.

3. Schutzvorrichtung (102, 202, 306, 402) nach wenigstens einem der Ansprüche 1 bis 2, **dadurch gekennzeichnet, dass** die Schutzvorrichtung (102, 202, 306, 402) eine informationstechnische Benutzerschnittstelle (404) aufweist.

4. Vorrichtung (300) zum Manipulieren von Werkstücken, die Vorrichtung aufweisend einen Manipulator (302) mit einem Effektor (100, 200, 304), **dadurch gekennzeichnet, dass** die Vorrichtung (300) eine Schutzvorrichtung (102, 202, 306) nach wenigstens einem der vorhergehenden Ansprüche aufweist.

5. Verfahren zum Betätigen einer Vorrichtung (300) nach Anspruch 4, **dadurch gekennzeichnet, dass** der wenigstens eine Druckraum (112) befüllt und das wenigstens eine erste Zugmittel (106, 206) freigegeben wird, wenn eine Manipulation eines Werkstücks nicht vorgesehen ist und/oder der wenigstens eine Druckraum (112) evakuiert und das wenigstens eine erste Zugmittel (106, 206) mithilfe des Aktuators mit einer Zugkraft beaufschlagt wird, wenn eine Manipulation eines Werkstücks vorgesehen ist.

6. Verfahren zum Betätigen einer Vorrichtung (300) nach Anspruch 5, **dadurch gekennzeichnet, dass** mithilfe einer informationstechnischen Benutzerschnittstelle (404) eine Statusinformation signalisiert wird.

## Claims

1. Protection device (102, 202, 306, 402) for an effector (100, 200, 304) of a manipulator (302), wherein the protection device (102, 202, 306, 402) comprises a flexible sleeve (104, 204, 308, 406) and the sleeve (104, 204, 308, 406) delimits a fillable and/or evacuable pressure chamber (112), **characterised in that** the protection device (102, 202, 306, 402) comprises at least one first pulling means (106, 206) for pulling back the sleeve (104, 204, 308, 406) and at least one actuator (208) for applying a pulling force to the at least one pulling means (206).

2. Protection device (102, 202, 306, 402) according to claim 1, **characterised in that** the protection device (102, 202, 306, 402) comprises a fastening module and the fastening module and the sleeve (104, 204, 308, 406) are connected to one another in a detachable and non-destructive manner.

3. Protection device (102, 202, 306, 402) according to at least one of claims 1 to 2, **characterised in that** the protection device (102, 202, 306, 402) comprises an information technology user interface (404).

4. Device (300) for manipulating workpieces, the device comprising a manipulator (302) with an effector (100, 200, 304), **characterised in that** the device (300) comprises a protection device (102, 202, 306) according to at least one of the preceding claims.

5. Method for actuating a device (300) according to claim 4, **characterised in that** the at least one pressure chamber (112) is filled and the at least one first pulling means (106, 206) is released, when a manipulation of a workpiece is not intended and/or the at least one pressure chamber (112) is evacuated and the at least one first pulling means (106, 206) is subjected to a pulling force by the actuator, when a manipulation of a workpiece is intended.

6. Method for actuating a device (300) according to claim 5, **characterised in that** status information is signalled by means of an information technology user interface (404).

## Revendications

1. Dispositif de protection (102, 202, 306, 402) pour un effecteur (100, 200, 304) d'un manipulateur (302), le dispositif de protection (102, 202, 306, 402) présentant une enveloppe (104, 204, 308, 406) molle à la flexion et l'enveloppe (104, 204, 308, 406) délimitant une chambre de pression (112) pouvant être remplie et/ou mise sous vide, **caractérisé en ce que** le dispositif de protection (102, 202, 306, 402) présente au moins un premier moyen de traction (106, 206) pour rétracter l'enveloppe (104, 204, 308, 406) et au moins un actionneur (208) pour appliquer une force de traction audit au moins un premier moyen de traction (206).

2. Dispositif de protection (102, 202, 306, 402) selon la revendication 1, **caractérisé en ce que** le dispositif de protection (102, 202, 306, 402) présente un module de fixation et le module de fixation et l'enveloppe (104, 204, 308, 406) sont reliés entre eux de manière amovible et non destructive.

3. Dispositif de protection (102, 202, 306, 402) selon au moins l'une des revendications 1 à 2, **caractérisé en ce que** le dispositif de protection (102, 202, 306, 402) présente une interface utilisateur de technologie de l'information (404).

4. Dispositif (300) de manipulation de pièces, le dispositif présentant un manipulateur (302) avec un effecteur (100, 200, 304), **caractérisé en ce que** le dispositif (300) présente un dispositif de protection (102, 202, 306) selon au moins l'une des revendications précédentes.

5. Procédé d'actionnement d'un dispositif (300) selon la revendication 4, **caractérisé en ce que** ladite au moins une chambre de compression (112) est remplie et ledit au moins un premier moyen de traction (106, 206) est libéré lorsqu'une manipulation d'une pièce n'est pas prévue et/ou ladite au moins une chambre de compression (1 12) est mise sous vide et ledit au moins un premier moyen de traction (106, 206) est soumis à une force de traction à l'aide dudit actionneur lorsqu'une manipulation d'une pièce est prévue.

6. Procédé d'actionnement d'un dispositif (300) selon la revendication 5, **caractérisé en ce qu'**une information d'état est signalée à l'aide d'une interface utilisateur (404) de technologie de l'information.
